(19) Europäisches Patentamt
European Patent Office
Office européen des brevets

(11) **EP 3 318 328 B1**

(12) **FASCICULE DE BREVET EUROPEEN**

(45) Date de publication et mention
de la délivrance du brevet:
**11.12.2019 Bulletin 2019/50**

(51) Int Cl.:
***B01L 3/00*** *(2006.01)*

(21) Numéro de dépôt: **17196682.3**

(22) Date de dépôt: **16.10.2017**

(54) **EQUIPEMENT DE TRI DE PARTICULES PRÉSENTES DANS UN ÉCHANTILLON FLUIDIQUE**

VORRICHTUNG ZUM SORTIEREN VON TEILCHEN IN EINER FLÜSSIGEN PROBE

SORTING DEVICE FOR PARTICLES PRESENT IN A FLUID SAMPLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.11.2016 FR 1660746**

(43) Date de publication de la demande:
**09.05.2018 Bulletin 2018/19**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **PARISET, Eloise
38000 Grenoble (FR)**
• **AGACHE, Vincent
38800 Champagnier (FR)**
• **REVOL-CAVALIER, Frédéric
38180 Seyssins (FR)**

(74) Mandataire: **GIE Innovation Competence Group
310, avenue Berthelot
69372 Lyon Cedex 08 (FR)**

(56) Documents cités:
FR-A1- 2 887 791    US-A1- 2007 026 419
US-A1- 2008 023 399    US-A1- 2009 286 300

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## Domaine technique de l'invention

La présente invention se rapporte à un équipement de tri de particules présentes dans un échantillon fluidique.

## Etat de la technique

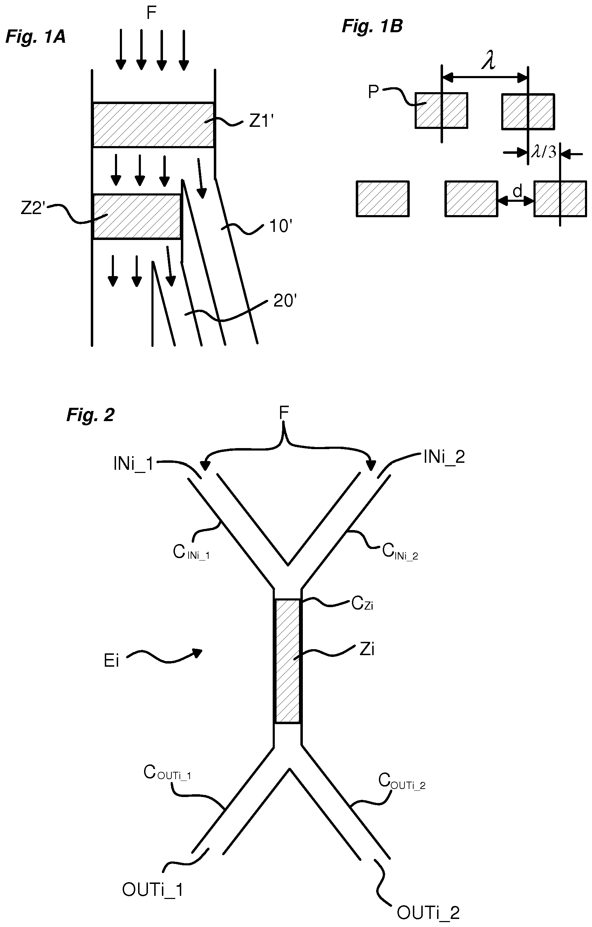

Des équipements de tri sont employés pour trier des particules selon leurs tailles dans un échantillon fluidique. Certains équipements employés pour effectuer des tris de particules par tailles mettent notamment en œuvre le principe dit de "déplacement latéral déterministe", également appelé DLD. Il s'agit d'un tri de particules qui permet d'acheminer les particules par gammes de tailles. Le phénomène de DLD est employé pour réaliser la séparation de particules de tailles pouvant aller de quelques nanomètres à plusieurs dizaines de micromètres. Il est mis en œuvre en utilisant un ou plusieurs réseaux de piliers placés sur le trajet de l'échantillon fluidique qui contient les diverses particules de tailles différentes à séparer. En référence à la figure 1B, un réseau de piliers P est constitué par exemple de plusieurs lignes de piliers régulièrement espacées et légèrement décalées d'une ligne à l'autre de manière à obtenir un positionnement des piliers en quinconce. Dans un réseau de piliers, le fluide qui traverse l'espace (définie par d sur la figure 1 B) séparant deux piliers d'une première ligne rencontre un pilier dans la ligne suivante, ce qui entraîne sa déviation. Une partie du fluide est déviée d'un côté du pilier et l'autre partie du fluide est déviée de l'autre côté du pilier.

La proportion de fluide déviée par un pilier dépend du rapport $\Delta\lambda/\lambda$, où $\Delta\lambda$ est défini comme le décalage d'une ligne de piliers à la suivante (égal à $\lambda/3$ sur la figure 1B) et A correspond à la distance centre à centre entre piliers voisins.

Le réseau de piliers est agencé pour trier les particules selon un diamètre critique. Cette dimension critique dépend de deux paramètres géométriques du réseau de piliers : l'espacement inter-piliers (d, figure 1B) et l'angle de décalage d'une ligne à l'autre de piliers (angle $\Delta\lambda/\lambda$, figure 1B). En diminuant ces deux paramètres, le diamètre critique est réduit, selon la loi établie par Davis en 2008 : $D_c = 1.4d\varepsilon^{0.48}$, avec $\varepsilon=\Delta\lambda/\lambda$. Ainsi les particules qui présentent un diamètre supérieur au diamètre critique du réseau sont déviées par les piliers et les particules qui présentent un diamètre inférieur au diamètre critique suivent une trajectoire sensiblement rectiligne à travers le réseau de piliers.

Afin de séparer différentes gammes de tailles de particules présentes dans un même échantillon, il est possible de mettre en série des réseaux de piliers présentant des caractéristiques géométriques différentes, et donc des diamètres critiques différents. Il est ainsi possible de mettre en œuvre un canal de DLD présentant des espacements inter-piliers de plus en plus élevés, afin d'augmenter progressivement le diamètre critique et de séparer des particules de diamètre de plus en plus élevé. Grâce à la présence de plusieurs canaux en sortie du dernier étage de tri, chaque taille de particules est collectée individuellement à partir du mélange initial contenant les différents types de particules.

Plusieurs configurations sont décrites dans l'état de la technique pour réaliser la mise en série de réseaux de piliers avec des paramètres géométriques variables. La configuration la plus simple consiste en une juxtaposition de zones de piliers de largeurs identiques mais présentant des espacements inter-piliers de diamètres critiques différents. Il a par exemple été proposé d'avoir des espacements inter-piliers de plus en plus élevés, permettant d'augmenter progressivement le diamètre critique et de séparer des particules de diamètre de plus en plus élevé. Cependant, cette configuration peut présenter des risques de colmatage des particules entre les piliers car toutes les particules traversent l'ensemble de la puce. En effet, les particules les plus grandes passent par tous les réseaux de piliers, notamment ceux présentant l'espacement inter-piliers le plus faible. Cela restreint donc la gamme de tailles pouvant être triées par ce type de dispositifs, le plus petit espacement inter-piliers devant être supérieur au plus grand diamètre des particules.

Dans d'autres configurations, il est possible d'ajuster les paramètres des piliers de façon à dévier des particules de diamètre de plus en plus faible et à les sortir progressivement de la zone de tri. Une première réalisation consiste à placer un canal de dérivation 10', 20' (ne contenant pas de piliers) en sortie de chaque zone Z1', Z2' de piliers afin d'extraire les particules déviées. Cette configuration est privilégiée lorsqu'il est nécessaire que les particules déviées par chaque zone de piliers soient extraites séparément. La figure 1A représente une telle configuration.

Cependant, cette dernière solution présente aussi certains inconvénients :

- Elle est complexe à mettre en œuvre car la même pression doit être appliquée sur toute la largeur en sortie de chaque zone, c'est-à-dire que la même pression doit être appliquée au niveau de la limite entre deux zones de piliers adjacentes et en entrée du canal de dérivation. En effet, si la pression appliquée est inférieure au niveau de l'une des deux sorties, les lignes de courant sont déviées vers le canal de plus faible pression, ce qui perturbe fortement la distribution des lignes de courant autour des piliers et empêche le tri des particules par le phénomène de DLD.

- La configuration de l'équipement de tri est figée et ne permet pas d'adapter le nombre de zones de piliers à l'échantillon introduit. Un design complexe doit donc être réalisé pour chaque type d'échantillon pour permettre de séparer les tailles de particules présentes dans l'échantillon de départ. L'utilisateur ne peut moduler ni les caractéristiques des piliers des différents réseaux de piliers, ni le nombre de réseaux de piliers mis en série.

- Les procédés de fabrication actuels ne permettent pas la réalisation de piliers présentant un rapport d'aspect (hauteur/largeur) excédant un facteur 20 environ. Au-delà de cette limite, les piliers sont fortement fragilisés et il n'est plus possible de garantir la verticalité des parois des piliers. Le procédé de fabrication limite donc la gamme de tailles de particules pouvant être triées par un même dispositif à un facteur 20 environ. Cette limitation est problématique pour de nombreuses applications, par exemple lorsque l'on souhaite isoler des virus ou des vésicules extracellulaires (exosomes en particulier) à partir de sang total. En effet, les virus et les exosomes ont une dimension caractéristique de 100 nm environ. Un même dispositif de DLD ne pourrait donc pas isoler ces composés d'intérêt à partir d'un échantillon contenant des particules supérieures à 2 $\mu$m environ, ce qui est par exemple problématique pour les isoler des globules rouges des échantillons de sang dont ils sont issus.

Par ailleurs, la demande de brevet US2009/286300A1 décrit une solution de tri d'amas de cellules par tailles. Ce document décrit notamment une solution d'injection d'huile pour encapsuler les cellules, une fois celles-ci triées.

Le but de l'invention est de proposer un équipement de tri de particules contenues dans un échantillon fluidique, qui permet de pallier les inconvénients des solutions antérieures. Il est fiable en ce qu'il permet de réaliser un tri des particules selon différentes gammes de tailles, sans risque de colmatage et en garantissant des résultats de tri satisfaisants. Il permet avantageusement de s'adapter au type d'échantillon introduit et au nombre de gammes de tailles de particules à séparer. Son architecture permet en outre de s'affranchir des contraintes de fabrication citées ci-dessus.

**Exposé de l'invention**

Ce but est atteint par un équipement de tri tel que défini en revendication 1
Par rapport à la solution décrite dans la demande de brevet US2009/286300A1 évoquée ci-dessus, l'invention consiste donc notamment à contrôler la pression de fluide à la sortie de chaque étage de tri à l'aide la solution d'équilibrage en vue d'équilibrer les pressions au niveau des sorties et non de juste encapsuler les cellules déjà triées.

Des particularités de l'équipement de tri sont définies dans les revendications dépendantes.

L'équipement de tri pourra être employé pour le tri de particules présentes dans un échantillon fluidique. La solution d'équilibrage employée est un fluide non miscible avec l'échantillon fluidique.

**Brève description des figures**

D'autres caractéristiques et avantages vont apparaître dans la description détaillée ci-dessous, en liaison avec les dessins annexés dans lesquels :

- La figure 1A représente un équipement de tri conforme à l'état de la technique.
- La figure 1B représente le principe d'un réseau de piliers pour mettre en œuvre un tri par le phénomène de DLD.
- La figure 2 représente, de manière schématique, un étage de tri employé dans un équipement de tri de l'invention.
- La figure 3 représente un équipement de tri conforme à l'invention dans lequel plusieurs étages de tri sont connectés en série.
- La figure 4A représente le principe de génération de gouttes au niveau de chaque sortie d'un étage de tri, selon le principe de contrôle de pression par pressurisation.
- La figure 4B représente des gouttes circulant dans un canal obtenues grâce au principe de contrôle de la pression par pressurisation.
- La figure 5 représente un premier mode de réalisation de la solution de contrôle de la pression par pressurisation.
- La figure 6 représente un deuxième mode de réalisation de la solution de contrôle de la pression par pressurisation.
- La figure 7 représente un schéma d'un mode de réalisation d'une solution de contrôle de pression par électromouillage employée dans l'équipement de tri de l'invention.
- Les figures 8A et 8B illustrent le fonctionnement de la solution de la figure 7 dans un équipement de tri conforme à l'invention.
- La figure 9 représente le principe du contrôle de pression par électromouillage dans un équipement de tri conforme à l'invention.
- La figure 10 illustre les différentes étapes de fabrication d'un équipement de tri conforme à l'invention.
- La figure 11 représente un exemple d'agencement employé pour isoler les gouttes d'échantillon et éliminer la phase continue transportant les gouttes.

**Description détaillée d'au moins un mode de réalisation**

L'équipement de tri de l'invention vise à trier et séparer des particules présentes dans un échantillon fluidique selon plusieurs gammes de tailles de particules.

Les particules triées pourront être de type organique ou inorganique. Parmi les particules triées dans un échantillon fluidique, on peut citer par exemple les particules de TiO2, d'Or, de silice, des billes magnétiques. Il pourra s'agir également de particules biologiques telles que des globules, virus, bactéries, exosomes, plaquettes. Bien entendu, cette liste n'est pas exhaustive et l'invention pourra s'appliquer au tri de tous types de particules.

Dans la présente description, par gamme de tailles de particules, on entend un intervalle de tailles dans lequel la taille des particules à trier et séparer est incluse.

Par ailleurs, il faut comprendre que dans une même gamme de taille, les particules peuvent être de nature (ou composition) identique ou différente.

On considérera que les particules à trier présentes dans l'échantillon ont une forme générale sphérique. Cependant, la solution de l'invention peut tout à fait s'adapter à des particules de formes diverses. Dans ce dernier cas, l'étage de tri devra être adapté pour séparer ces particules.

Dans la présente description, on entend par échantillon fluidique, un échantillon sous la forme d'un gaz ou d'un liquide dans lequel les particules à séparer sont présentes. Il pourra s'agir d'un fluide vecteur auquel est adjoint le mélange qui comporte les particules à trier. L'échantillon fluidique peut être formé en amont de l'équipement ou formé directement dans l'équipement en introduisant de manière séparée le fluide vecteur et le mélange de particules.

Après tri et séparation, chaque groupe de particules est par exemple acheminé ensuite vers un détecteur Di distinct. Chaque détecteur Di est adapté à la gamme de tailles de particules qu'il reçoit. Les détecteurs employés font avantageusement partie de l'équipement de tri de l'invention. Selon la taille des particules à détecter, les détecteurs sont par exemple de type SMR (Suspended Microchannel Resonator) ou SNR (Suspended Nanochannel Resonator). Tout autre type de détecteur adapté pourrait être envisagé.

L'équipement de tri de l'invention comporte avantageusement plusieurs étages de tri Ei connectés en série. Chaque étage de tri Ei est destiné au tri de particules selon une gamme de tailles particulière. Chaque étage de tri fonctionne préférentiellement selon le principe de "déplacement latéral déterministe" (DLD) déjà décrit ci-dessus. Bien entendu, d'autres solutions de tri et de séparation pourraient être employées, en conservant le principe de l'invention qui sera décrit ci-dessous.

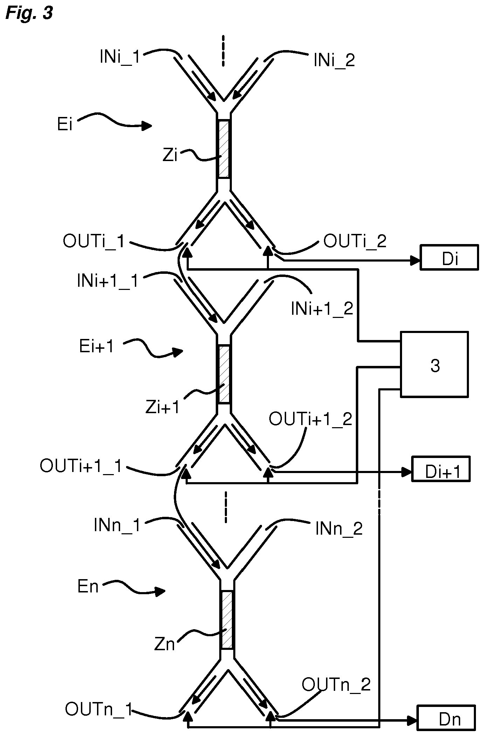

Pour mieux comprendre l'invention, on considère que chaque étage de tri Ei de l'équipement de tri de l'invention est défini par un rang i, avec i allant de 1 à n et avec n supérieur ou égal à 2. La figure 3 permet d'illustrer cette architecture. L'étage de tri E1 de rang 1 est l'étage qui reçoit l'échantillon fluidique contenant les particules à trier et qui permet de séparer les particules dont la taille est la plus importante et l'étage de tri de rang n est le dernier étage de l'équipement, permettant de séparer les particules contenues dans l'échantillon ayant la taille la plus petite. De manière générale, l'étage de rang i+1 permet de séparer des particules de taille plus petite que l'étage de rang i.

De manière avantageuse, chaque étage de tri Ei de l'équipement se présente sous la forme d'un module distinct, c'est-à-dire d'un élément monobloc, qu'il est possible de connecter à un autre module d'un étage de tri pour former une série de plusieurs étages de tri successifs. De cette manière, l'équipement de tri de l'invention est modulable :

- En fonction du nombre de particules de gammes de tailles différentes à séparer, en positionnant en série plus ou moins de modules ;
- En fonction des gammes de taille des particules présentes dans l'échantillon, en sélectionnant chaque étage de tri par rapport aux gammes de taille de particules présentes dans l'échantillon ;

Selon l'invention, en référence à la figure 3, chaque étage de tri Ei de rang i comporte les caractéristiques suivantes :

- Au moins une première entrée INi_1 par laquelle l'échantillon fluidique comportant les particules est introduit ;
- Un dispositif de tri de particules selon une gamme de tailles déterminée, comportant préférentiellement un réseau ou une zone de piliers Zi pour mettre en œuvre un phénomène de type DLD, selon un diamètre critique Dci ;
- Une première sortie OUTi_1 pour récupérer les particules triées par l'étage de tri de diamètre inférieur au diamètre critique Dci de l'étage Ei ;
- Une deuxième sortie OUTi_2 pour récupérer les particules triées par l'étage de tri de diamètre supérieur au diamètre critique Dci de l'étage Ei ;
- Eventuellement une seconde entrée INi_2 par laquelle une solution porteuse sans particules est introduite afin d'éliminer les particules triées de diamètre supérieur au diamètre critique Dci de l'étage Ei provenant de l'échantillon fluidique comportant les particules ;

L'échantillon fluidique est introduit par l'entrée IN1_1 de l'étage de rang i (avec i=1).

En référence à la figure 3, on a alors la configuration suivante :

- La première entrée INi_1 de l'étage de rang i reçoit l'échantillon fluidique et la deuxième entrée INi_2 de l'étage de rang i reçoit une solution porteuse sans particules ;

- La première entrée INi+1_1 de l'étage de tri de rang i+1 est connectée sur la première sortie OUTi_1 de l'étage de rang i ;

- La première sortie OUTi_1 de l'étage de rang i permet de récupérer les particules séparées par l'étage de rang i de diamètre inférieur au diamètre critique Dci de l'étage Ei pour les acheminer vers la première entrée INi+1_1 de l'étage de tri de rang i+1 ;

- La deuxième sortie OUTi_2 de l'étage de tri de rang i permet de récupérer les particules séparées par l'étage de rang i de diamètre supérieur au diamètre critique de l'étage Ei pour les éliminer ou les analyser par un détecteur Di ;

- La première sortie OUTi+1_1 de l'étage de tri de rang i+1 permet de récupérer les particules séparées par cet étage de rang i+1 de diamètre inférieur au diamètre critique Dci+1 de l'étage Ei+1 pour les acheminer vers la première entrée INi+2_1 de l'étage de tri de rang i+2 situé en aval ou vers un réceptacle de fin de tri ;

- La deuxième sortie OUTi+1_2 de l'étage de tri de rang i+1 permet de faire circuler les particules de diamètre supérieur au diamètre critique Dci+1 de l'étage Ei+1 pour les acheminer vers un détecteur Di+1 ou vers un réceptacle de fin de tri.

De manière plus précise, en référence à la figure 2, chaque module formant un étage de tri Ei est formé d'un ensemble de canaux microfluidiques reliés entre eux. Chaque étage de tri comporte ainsi :

- Un premier canal d'entrée $C_{INi\_1}$, comprenant ladite première entrée ;

- Un deuxième canal d'entrée $C_{INi\_2}$ comprenant ladite deuxième entrée ;

- Un canal central Czi comprenant un premier point de jonction, formant une première extrémité, au niveau de laquelle débouchent le premier canal d'entrée et le deuxième canal d'entrée et un deuxième point de jonction formant une deuxième extrémité ; Le réseau de piliers permettant le tri de particules est réalisé dans le canal central ;

- Un premier canal de sortie $C_{OUTi\_1}$ sortant du canal central au niveau de son deuxième point de jonction et comprenant la première sortie de l'étage de tri ;

- Un deuxième canal de sortie $C_{OUTi\_2}$ sortant du canal central au niveau de son deuxième point de jonction et comprenant la deuxième sortie de l'étage de tri ;

Dans l'architecture de chaque module formant un étage de tri, les deux canaux d'entrée $C_{INi\_1}$, $C_{INi\_2}$ sont par exemple de dimensions identiques, c'est-à-dire de longueur et de section identiques et les deux canaux de sortie sont également de dimensions identiques, c'est-à-dire de longueur et de section identiques. Le canal central $C_{Zi}$ permet la jonction entre les deux entrées et les deux sorties du module.

On a vu ci-dessus que lorsque plusieurs étages de tri sont connectés en série, l'étage de tri de rang i+1 engendre la création d'une forte résistance fluidique au niveau de la première sortie de l'étage de rang i, liée notamment à la présence de son réseau de piliers. On considère ci-dessous que l'étage de tri de rang i est dédié à la séparation de particules d'une première gamme de tailles, dénommée T1 et que l'étage de tri de rang i+1 est dédié à la séparation de particules d'une deuxième gamme de tailles, dénommée T2, inférieure à la gamme T1. A cause de la résistance fluidique générée par l'étage de tri de rang i+1, il est possible qu'une partie du fluide vecteur portant des particules de gamme T2 ne se dirige pas vers l'étage de rang i+1 mais accompagne des particules de gamme T1 vers la deuxième sortie de l'étage de rang i.

Pour résoudre ce problème, l'équipement de tri de l'invention comporte des moyens 3 de contrôle de la pression appliquée sur chaque sortie des étages de tri (figure 3). Plus précisément, les moyens 3 de contrôle de la pression sont agencés pour obtenir une pression identique au niveau des deux sorties de chaque étage de tri. De cette manière, l'échantillon fluidique portant les particules de gamme T2 ne sera pas détourné au niveau de l'étage de tri de rang i.

Pour assurer un équilibrage des pressions, les moyens 3 de contrôle de la pression utilisent une solution d'équilibrage Seq. Cette solution d'équilibrage est amenée au niveau des sorties de chaque étage de tri de l'équipement afin d'y contrôler la pression de l'échantillon fluidique. Les moyens 3 de contrôle de la pression comportent notamment des moyens d'injection de la solution d'équilibrage à un débit ou pression donnée.

Le principe de contrôle de la pression repose sur la réalisation de vannes fluidiques situées au niveau des sorties de chaque étage de tri. La solution d'équilibrage Seq est choisie non miscible à l'échantillon fluidique F et permet d'obstruer partiellement et temporairement les sorties des étages de tri et d'imposer une pression identique au niveau des deux zones à équilibrer durant toute l'étape de tri des particules. On verra que le contrôle de ces vannes fluidiques peut être réalisé soit par pressurisation, soit par électromouillage.

L'intérêt de mettre en œuvre un contrôle de la pression se présente notamment :

- Lorsqu'un seul étage de tri Ei est employé (n=1), le détecteur Di situé sur la deuxième sortie entraînant un déséquilibre de pression entre les deux sorties ;

- Lorsque plusieurs étages de tri sont connectés en série, c'est-à-dire lorsque le nombre n d'étages de tri est supérieur ou égal à 2 ;

- Lorsque d'autres perturbations sont présentes au niveau des deux canaux de sortie d'un étage de tri, telles que par exemple la présence de bulles d'air, d'agglomérats de particules ;

Deux modes de fonctionnement sont ainsi possibles, en fonction de la méthode mise en oeuvre : le contrôle par pressurisation donne lieu à une discrétisation de l'échantillon en différentes gouttes ou "slugs" générés au fur et à mesure du tri, tandis que le contrôle par électromouillage permet l'obstruction partielle des canaux de sortie au cours du tri tout en permettant le passage contrôlé des solutions en sortie de l'étage de tri. En effet, en fonction de la position de la goutte au niveau des deux trous de sortie de l'étape de tri, la résistance fluidique vue par la solution de particules est modulée (plus la goutte obstrue le trou plus la résistance est importante). Cette technique permet de fixer artificiellement les impédances en sortie de chaque étape de tri, qui ne sont donc plus dépendantes des étapes en aval de la sortie du tri, ce qui permet d'équilibrer les impédances des deux trous de sortie.

Dans les deux cas, le contrôle de la pression en sortie des étages de tri est assuré par la présence de la solution d'équilibrage et permet de garantir l'indépendance des pressions de sortie par rapport aux autres étages de tri situés en aval.

### *Contrôle par pressurisation*

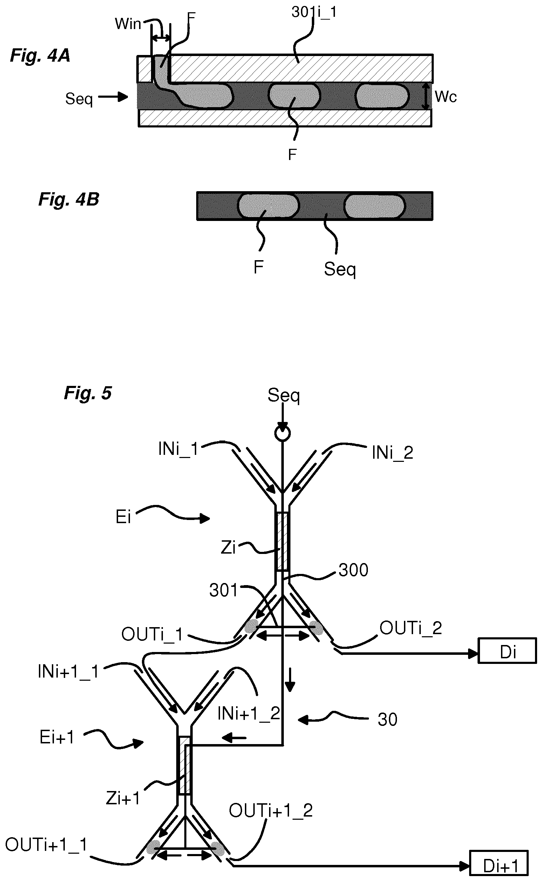

Dans le cas d'un contrôle de la solution d'équilibrage Seq par pressurisation, la pression exercée par la solution d'équilibrage sur la solution d'échantillon F génère la rupture du flux continu d'échantillon pour une large gamme de débits des phases continue et dispersée. Ce phénomène permet de produire des gouttes d'échantillons F contenues dans la solution d'équilibrage, comme illustré sur les figures 4A et 4B. L'échantillon fluidique F forme ainsi la phase dispersée et la solution d'équilibrage forme la phase continue. Ce cycle de formation des gouttes permet à tout moment de fixer la pression au niveau de l'extrémité de la phase dispersée. Le phénomène de génération des gouttes ayant lieu simultanément à chaque sortie du module de l'étage de tri, les pressions à ces deux niveaux sont maîtrisées et équilibrées tout au long du tri.

Pour assurer la présence de la solution d'équilibrage au niveau de chaque sortie, deux modes de réalisation distincts sont notamment envisagés.

Un premier mode de réalisation est illustré par la figure 5.

Selon ce premier mode de réalisation, pour amener la solution d'équilibrage au niveau de chaque sortie d'un étage de tri, les moyens 3 de contrôle de la pression comportent avantageusement un réseau de canaux, agencé pour véhiculer la solution d'équilibrage Seq. Ce réseau de canaux comporte au moins un canal principal 300 comportant une première extrémité formant une entrée par laquelle la solution d'équilibrage est injectée et, pour chaque étage de tri de rang i, une intersection par laquelle le canal principal se sépare en deux canaux secondaires 301 joignant chacun une sortie distincte de l'étage de tri de rang i, pour i allant de 1 à n. Le réseau de canaux est schématisé sur la figure 5.

Dans ce mode de réalisation, la jonction entre la première sortie de l'étage de rang i vers la première entrée de l'étage de tri de rang i+1 est réalisée grâce au réseau de canaux des moyens de contrôle en pression. Le canal secondaire dans lequel débouche la première sortie de l'étage de tri de rang i se prolonge pour rejoindre la première entrée de l'étage de tri de rang i+1. Comme évoqué ci-dessus, ce schéma de transport de la solution d'équilibrage est dupliqué pour chaque étage de tri de l'équipement. Pour chaque nouvel étage de tri de rang i+1, le canal principal 300 véhiculant la solution d'équilibrage se poursuit jusqu'à se séparer en deux autres canaux secondaires 301 joignant chacun respectivement la première sortie et la deuxième sortie de l'étage de rang i+1.

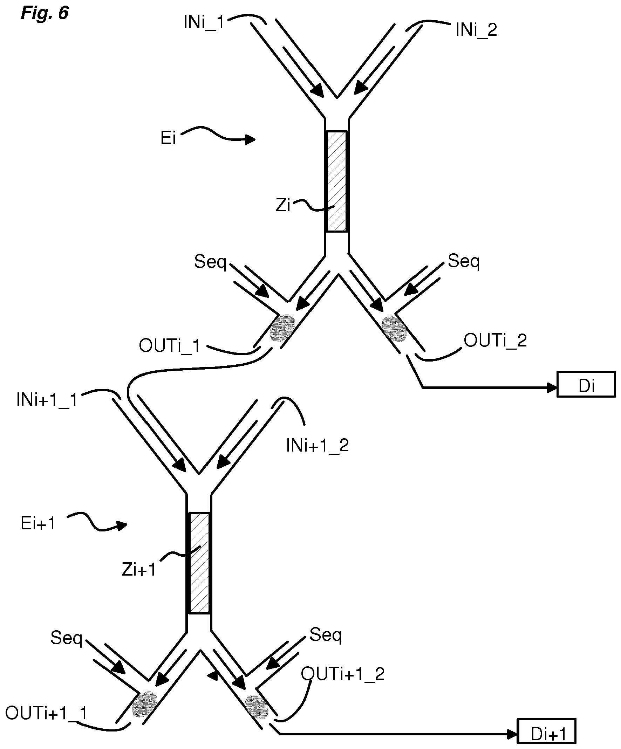

Selon un deuxième mode de réalisation représenté sur la figure 6, une entrée de solution d'équilibrage est agencée au niveau de chaque sortie d'un étage de tri. La solution d'équilibrage est alors injectée de manière indépendante au niveau de chaque sortie et son débit est ajusté à chaque sortie de manière à équilibrer les pressions entre les deux sorties. Ce système d'équilibrage des pressions peut s'adapter à tout type de géométrie des canaux de sortie, y compris dans la situation où les deux canaux de sorties ne sont pas identiques. Par exemple, si un des deux canaux est n fois plus large que l'autre, à l'équilibre, le débit doit être n fois plus important du côté le plus large par rapport à l'autre côté. Pour une goutte générée dans le canal le plus étroit, n gouttes de même taille doivent donc être générées dans l'autre canal dans le même intervalle de temps $\Delta t$.

Cette deuxième solution est mise en œuvre à partir de mesures de pression ou de débit au niveau des deux sorties de chaque étage de tri.

Pour suivre facilement le débit de fluide au niveau de chaque sortie, il est possible de déterminer le nombre de gouttes générées à chaque sortie pendant un intervalle de temps donné. Une caméra rapide permet notamment de déterminer la fréquence de passage des gouttes. La recherche de l'équilibre de pression entre les deux sorties d'un même étage de tri Ei peut ensuite être effectuée automatiquement en asservissant des contrôleurs en pression à la caméra.

Dans une variante de réalisation, le contrôle des pressions entre les deux sorties d'un même étage de tri Ei peut également être réalisé à partir de mesures de variations de permittivités diélectriques au passage d'une phase à une autre par des électrodes ITO intégrées au canal d'acheminement des gouttes.

Une autre variante de réalisation consiste à employer les détecteurs de type SMR (suspended microchannel resonators) pour contrôler la fréquence de génération et le volume des gouttes, par mesure continue de la densité de la solution et détection des changements de phase solution d'intérêt/solution d'équilibrage et solution d'équilibrage/solution d'intérêt.

A partir des mesures effectuées, le contrôle du débit de la solution d'équilibrage pourra être réalisé selon différentes variantes de réalisation. L'une des variantes de réalisation consiste notamment à commander des vannes microfluidiques, agencées sur chaque canal d'arrivée de la solution d'équilibrage. Une autre variante consiste à commander directement l'injection de la solution d'équilibrage à la pression nécessaire pour obtenir un équilibrage.

Ces différents moyens de contrôle de la génération de gouttes dans chaque canal de sortie des étages de tri permettent alors d'exercer un rétro-contrôle sur les contrôleurs en pression afin d'atteindre l'équilibre souhaité.

Il faut noter par ailleurs, que dans le cas d'une détection des particules présentes dans l'échantillon par un détecteur Di de type SMR/SNR tel que décrit ci-dessus, la génération de gouttes présente l'avantage supplémentaire de fournir des périodes de calibration pour le détecteur Di, délimitées temporairement par le temps de passage de la solution d'équilibrage Seq au sein du détecteur entre deux gouttes successives d'échantillon fluidique. En effet, une re-calibration régulière du détecteur Di est nécessaire car, en raison des fluctuations thermiques du milieu environnant, son signal fréquentiel a tendance à légèrement dériver, ce qui perturbe les mesures de masse de particules. La solution d'équilibrage se présente donc également comme une solution de calibration de densité connue et maîtrisée, permettant d'éviter les dérives du signal en fréquence du détecteur.

Ainsi, grâce au principe de l'invention, les variations de pression liées à la génération des gouttes se situent principalement au niveau de la phase continue, tandis que la pression dans la phase dispersée reste stable tout au long du cycle. Ce phénomène est mis à profit pour notre application car une pression constante doit être garantie au niveau de l'extrémité de la phase dispersée.

Cette solution présente de nombreux avantages car elle ne nécessite pas l'emploi de détecteurs de pression pour régler la pression au niveau de chaque sortie. La pression au niveau des sorties est fixée par celle appliquée à la solution d'équilibrage et grâce à la génération des gouttes d'échantillon.

### *Contrôle par électromouillaae*

L'utilisation du phénomène d'électromouillage permet également de contrôler la résistance fluidique au niveau des canaux de sortie de l'échantillon au cours du tri, en déplaçant une goutte de solution d'équilibrage Seq non miscible au niveau de la jonction. A partir d'un large réservoir de la solution d'équilibrage, des gouttes de cette solution sont générées et transportées jusqu'à des positions bien déterminées à chaque sortie de l'étage de tri. L'obstruction partielle des sorties de l'étage de tri Ei permet d'équilibrer les impédances des deux canaux durant l'étape de séparation des particules, tout en permettant le passage de la solution triée vers les étapes suivantes du système. En effet, en fonction de la position de la goutte au niveau des sorties de l'étage de tri Ei, la résistance fluidique vue par la solution de particules est modulée (plus la goutte obstrue le trou plus la résistance est importante). Cette technique permet de fixer artificiellement les impédances en sortie de chaque étage de tri Ei, qui ne sont donc plus dépendantes des étages de tri présents en aval.

Pour mettre en œuvre le principe d'électromouillage, la solution d'équilibrage Seq doit être confinée entre deux substrats parallèles 40, 41, dont l'un des deux (41) contient des électrodes 51 réparties selon la trajectoire du liquide désirée (figure 6). L'autre substrat (40) est une électrode 50 homogène, qui assure le contact électrique de la goutte indépendamment de sa position. Les manipulations classiques de gouttes de quelques microlitres, comme le déplacement, la fusion, le mélange et la section de gouttes par électromouillage sont bien développées dans l'état de la technique pour des tensions de l'ordre de la dizaine de volts.

En particulier, le phénomène EWOD (électromouillage sur diélectrique) est largement utilisé pour ce type de réalisations. Ce mode d'actionnement est fondé sur la modification de l'angle de contact d'une goutte de liquide conducteur et polarisable sur un substrat, par génération d'une force électromécanique, grâce à une différence de potentiel entre la goutte et l'électrode. Les moyens d'application d'un potentiel électrique au niveau de chaque électrode font avantageusement partie des moyens 3 de contrôle de la pression.

Lorsqu'un potentiel suffisant est appliqué à l'une des électrodes 51 de contrôle, l'énergie de surface associée provoque l'alignement de la goutte 60 sur cette électrode. En appliquant successivement un potentiel non nul à différentes électrodes, la goutte peut ainsi être déplacée ou sectionnée dans le canal.

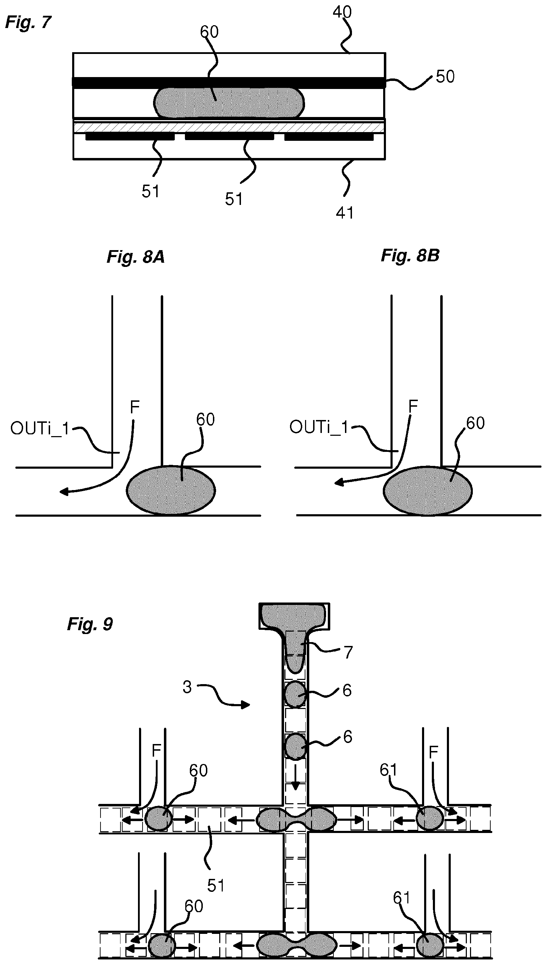

Le schéma de principe de la modulation d'impédance par la mise en présence d'une goutte 60 non miscible en sortie du canal est donné en figures 8A et 8B. Sur ces figures, on remarque que la position de la goutte au niveau de la sortie de l'étage de tri permet de moduler la pression de fluide en sortie du canal.

La position de la goutte est contrôlée par la présence de plusieurs électrodes au niveau inférieur du canal. La précision du positionnement de la goutte 60 par rapport à la sortie du canal est déterminée par le nombre et la taille des électrodes présentes à ce niveau.

Ainsi, dans le cas d'une impédance plus élevée d'une sortie par rapport à l'autre d'un étage de tri, ces impédances peuvent être rééquilibrées en obstruant davantage la sortie de moindre impédance pour atteindre l'impédance de la seconde sortie.

Le déplacement des gouttes est réalisé dans le réseau 30 de canaux des moyens 3 de contrôle en pression évoqués ci-dessus. Ce réseau intègre les électrodes 51 qui permettent le déplacement des gouttes.

Les différentes étapes de ce mode de réalisation sont illustrées par la figure 9 :

1. Une goutte 6 est générée à partir d'un réservoir 7 de solution d'équilibrage et déplacée vers la première intersection du canal de la phase d'équilibrage. Le déplacement des gouttes au sein des canaux se fait par EWOD, en appliquant successivement un potentiel aux différentes électrodes du canal.

2. Au niveau de l'intersection, la goutte 6 formée est divisée en deux (60, 61) par l'application d'un potentiel à chacune des deux électrodes adjacentes à l'électrode centrale.

3. Les deux gouttes 60, 61 formées sont placées à la sortie des deux canaux de l'étage de tri de rang i, afin d'assurer l'équilibrage des pressions de sortie au niveau de cet étage. Les gouttes sont immobilisées en sortie des canaux lorsque les électrodes sont mises à la terre.

4. Les étapes (2) et (3) sont répétées afin de placer une goutte au niveau de chaque sortie de chaque étage.

5. La solution de particules peut alors être injectée par l'entrée de l'étage de rang 1 pour subir un tri cascadé via tous les étages de tri successivement.

Ce principe de fonctionnement peut s'étendre à un nombre illimité d'étages de tri et de caractérisations en cascade.

Les solutions utilisées pour générer les gouttes et les déplacer par EWOD doivent être conductrices et polarisables. Deux possibilités sont envisagées :

- Soit l'utilisation d'une solution d'huile comportant un surfactant ionique pour la formation des gouttes et leur déplacement. Ce sont alors directement ces gouttes d'huile qui permettent d'obstruer les canaux de sortie des étages de tri.

- Soit la génération de gouttes aqueuses, dans une phase continue d'huile.

L'obstruction des canaux de sortie des étages de tri est alors assurée par des zones d'huile encadrées par deux gouttes aqueuses, et déplacées grâce au mouvement de ces gouttes (actionné par EWOD). Dans ce cas, au moins deux gouttes aqueuses doivent être introduites dans chaque branche en sortie de l'étage de tri pour pouvoir manipuler une goutte de phase organique au niveau de chaque sortie.

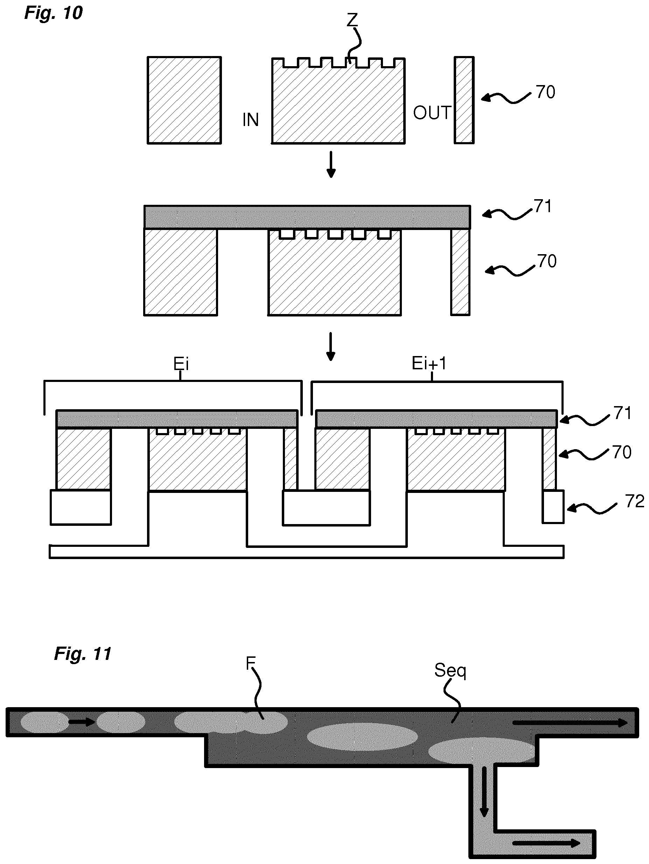

En référence à la figure 10, l'équipement de tri de l'invention est par exemple réalisé sous la forme d'une structure multicouches. Une fois assemblées entre elles, les couches forment un ensemble monobloc. Un ensemble de couches est par exemple dédié aux modules formant les étages de tri Ei et un ensemble d'une ou plusieurs couches supplémentaires peut être ajouté pour former le réseau 30 de canaux nécessaires à la circulation de la solution d'équilibrage Seq pour le contrôle en pression selon l'une des méthodes décrites ci-dessus. La figure 10 illustre un tel assemblage.

La solution d'équilibrage, et l'échantillon fluidique sont stockés dans des réservoirs séparés. Des tuyaux de liaison permettent de relier chacun des réservoirs à une entrée correspondante de l'équipement de tri.

A titre d'exemple et de manière non limitative, la figure 10 illustre un principe de fabrication des étages de tri de l'équipement de tri de l'invention. Sur la figure 10, la vue étant suivant une coupe transversale, toute la structure fluidique n'est pas rendue visible.

Il comporte ainsi une première plaque 70, par exemple réalisée en silicium ou dans un matériau équivalent, dans laquelle sont gravées chaque entrée (IN) de l'étage de tri (Ei), ses deux sorties (OUT) et le réseau de piliers (Z). La gravure est réalisée par des techniques de micro-technologie. Chaque entrée et les deux sorties sont formées par des ouvertures traversantes alors que le réseau de piliers est gravé sur la surface, dite surface supérieure, de la plaque.

Un capot 71, par exemple en verre est ensuite posé sur la surface supérieure par soudure anodique, permettant de sceller d'un côté le réseau microfluidique de l'équipement de tri.

Une deuxième plaque 72, par exemple réalisée sous la forme d'une carte en matériau plastique ou en verre (nécessaire pour la réalisation du contrôle de pression par électromouillage), est fixée sur la surface inférieure de la première plaque 70. Cette deuxième plaque 72 permet d'apporter le réseau microfluidique nécessaire à la connexion de plusieurs étages de tri Ei entre eux. Cette deuxième plaque 72 comporte ainsi :

- Les canaux de liaison d'un étage de tri à un autre étage de tri. Il s'agit donc notamment de réaliser la jonction entre la première sortie OUTi_1 d'un étage de tri de rang i vers la première entrée INi+1_1 d'un étage de tri de rang i+1 ;

- Les canaux de liaison entre la deuxième sortie de chaque étage de tri vers le détecteur employé ou le réservoir de fin de tri ;

- Les canaux du réseau 30 de canaux des moyens 3 de contrôle en pression, agencés pour véhiculer la solution d'équilibrage Seq jusqu'aux différentes sorties des étages de tri ;

L'étanchéité entre la première plaque 70 en silicium et la deuxième plaque 72, par exemple en matériau plastique, est assurée soit par sérigraphie pour contrôler la localisation de colles biocompatibles, soit par encastrement mécanique d'un cadre de maintien dans la carte plastique. Dans ce cas, l'étanchéité au niveau des canaux d'accès fluidiques de la puce est garantie par un joint en silicone.

### *Exemple de mise en œuvre*

L'invention présentée peut par exemple permettre la détection, par des détecteurs Di de type SMR, de différents composants sanguins isolés à partir de sang total : globules rouges et plaquettes, microvésicules et exosomes. Ce mode de réalisation nécessite l'utilisation de trois étages de tri reliés en cascade (ou autrement dit en série) :

- Dans le premier étage de tri (i=1), l'espacement inter-piliers (G) est de 20 $\mu$m et permet de séparer les particules autour d'un diamètre critique (Dc) de 3 $\mu$m ;

- Dans le deuxième étage de tri (i=2), G vaut 4 $\mu$m et Dc vaut 500 nm ;

- Dans le troisième étage de tri (i=3), G est choisi égal à 700 nm et permet de trier des particules autour d'un diamètre critique de 100 nm ;

Ainsi, les hauteurs maximales des canaux sont respectivement, pour l'étage de tri de rang 1, de rang 2 et de rang 3, 400 $\mu$m, 80 $\mu$m et 14 $\mu$m.

Des détecteurs de type SMR différents sont utilisés pour chaque étage de tri. Pour la détection des globules rouges et des plaquettes, la largeur et la hauteur du canal du détecteur SMR sont choisies au moins supérieures à 12 $\mu$m. Ce détecteur ne présente pas la résolution nécessaire à la détection des microvésicules en sortie du deuxième étage de tri. Un détecteur SMR de dimension plus faible est donc nécessaire pour cette seconde détection. De la même façon, un troisième détecteur SMR présentant une section de canal encore sept fois plus faible est nécessaire pour atteindre la résolution requise pour la détection des exosomes.

Nous précisons ci-dessous les conditions expérimentales requises pour la génération de gouttes d'échantillon au niveau des zones de contact entre la solution d'équilibrage et l'échantillon. Pour l'équilibrage en pression des sorties, la configuration en T décrite ci-dessus est employée.

Deux modes de génération peuvent être observés en fonction du ratio entre la largeur du canal d'arrivée de la phase dispersée (désignée Win) et la largeur du canal principal (désignée Wc).

Lorsque Win est largement inférieur à Wc, les gouttes sont générées par les forces de cisaillement exercées par la phase continue sur la phase dispersée. Ce régime, appelé régime de "dripping", donne lieu à des gouttelettes sphériques, générées lorsque les forces de cisaillement visqueux exercées par la phase continue deviennent supérieures à la tension interfaciale de la phase dispersée.

Lorsque la largeur Win est du même ordre de grandeur que la largeur Wc, le régime de "squeezing" est rencontré. La phase dispersée obstrue alors complètement la largeur du canal principal et contraint le flux continu qui circule autour. Cet effet de blocage de la phase continue par la phase dispersée provoque une forte augmentation de la pression dynamique sur le pourtour de la phase dispersée, ce qui conduit au pincement de la phase dispersée et à la génération de goutes allongées (sensiblement oblongues), occupant toute la largeur du canal.

Le régime de "squeezing" est préférentiellement employé car il permet d'obtenir des gouttes allongées et d'injecter des volumes suffisamment importants d'échantillon sans huile pour remplir le détecteur SMR. De plus, ce régime est le plus simple à obtenir, puisque les largeurs du canal d'alimentation de la phase dispersée et du canal principal sont du même ordre de grandeur et les débits typiquement obtenus dans les dispositifs (de l'ordre de $10^{-2}$ $\mu$L/s) correspondent à un nombre capillaire faible (Ca = $\mu$u/$\gamma$ ~$10^{-2}$, avec $\mu$ la viscosité, u la vitesse du fluide porteur et $\gamma$ la tension interfaciale).

Au sein de ce régime de "squeezing", la dimension des gouttes générées ne dépend que de la largeur du canal principal Wc, et du rapport des débits de la phase dispersée (Qin) et de la phase continue (Qout), pour une géométrie des canaux donnée. Le volume des réservoirs d'échantillon encapsulés peut donc être modulé en faisant varier le débit de la solution d'équilibrage, qui correspond à la phase continue dans notre dispositif, le débit de la phase dispersée étant limité par les étages de tri situés en amont.

Le volume des gouttes générées peut être modulé selon la relation suivante :

$$\frac{L}{w_c} = 1 + \alpha \frac{Q_{in}}{Q_{out}}$$

Dans laquelle :

- $\alpha$ est une constante qui dépend de la géométrie de la jonction en T ;
- L est la longueur de la goutte ;

Dans un exemple de mise en œuvre, le canal contenant l'échantillon (phase dispersée) peut être choisi de section 50 $\mu$m x 50 $\mu$m et le canal contenant la solution d'équilibrage (phase continue) peut être choisi de section 100 $\mu$m x 100 $\mu$m. Le débit typique de l'échantillon dans un étage de tri est de l'ordre de 1 $\mu$L/min.

Le débit de la solution contenant les particules est choisi de façon à optimiser le tri par l'équipement. Puis, le débit de la solution d'équilibrage est adapté en fonction du débit choisi pour l'échantillon afin de générer des gouttes de taille voulue. Ces deux débits sont contrôlés par application d'une pression au niveau des entrées fluidiques et ils sont dépendants des résistances fluidiques des canaux, et donc de leurs dimensions.

On considère un équipement de tri tel que celui de la figure 3 à trois étages de tri et que les canaux du réseau 30 de canaux des moyens 3 de contrôle en pression ont une section constante garantissant un débit constant dans ces canaux.

Avec un débit pour l'échantillon fluidique F de Qw au niveau des deux canaux d'entrée du premier étage de tri et un débit en solution d'équilibrage (par exemple huile fluorée biocompatible) égal à 3Qw/10 au niveau du canal d'entrée de la solution d'équilibrage, ce débit est divisé par trois au niveau de la première intersection du réseau 30 de canaux si tous les canaux de cette intersection présentent la même section. Au niveau des jonctions en T de la première étape d'équilibrage, le rapport entre les débits d'échantillon et d'huile vaut donc environ 10, ce qui correspond à des gouttes de longueur 10 fois plus élevée que la largeur du canal principal de la jonction en T. Ces gouttes sont injectées dans le second étage de tri avec un débit égal à celui de la phase continue d'huile qui les transporte, soit Qw/10. Comme précédemment, le débit de la phase continue est divisé par trois au niveau de la seconde intersection du réseau 30 de canaux et donc le rapport des débits pour la seconde étape d'équilibrage vaut environ 5, ce qui correspond à des gouttes 6 fois plus longues que larges.

Enfin, le même raisonnement conduit à des gouttes de rapport L/w environ égal à 3 au niveau du dernier étage de tri. On remarque que le volume des gouttes diminue au fur et à mesure des étapes d'encapsulation, ce qui signifie que chaque goutte provenant de l'étape de tri précédent est lui-même sectionné en plusieurs gouttes au niveau de l'étape d'encapsulation suivante. Cela n'est pas problématique puisque le volume des gouttes reste largement supérieur à celui du canal embarqué dans le détecteur.

Les solutions pouvant être utilisées pour l'encapsulation de l'échantillon (c'est-à-dire pour former une phase non miscible avec l'échantillon fluidique) sont bien connues dans l'état de l'art. Les huiles fluorées biocompatibles telles que HFE-7500 [9] et FC-40 sont largement utilisées pour l'encapsulation de particules contenues dans des échantillons de sang ou de milieu de culture. Ces huiles doivent être associées à un fluoro-surfactant biocompatible pour stabiliser les émulsions, généralement composé d'un copolymère contenant deux queues PFPE (perfluoropolyether). Le mélange huile - surfactant peut donc être utilisé comme solution d'équilibrage et d'encapsulation des échantillons à analyser.

En référence à la figure 11, une solution de séparation des deux phases, c'est-à-dire celle formée de l'échantillon et celle formée de la solution d'équilibrage, peut notamment être ajoutée à l'équipement de tri de l'invention, au niveau d'une sortie ou des deux sorties de chaque étage de tri Ei de l'équipement. La problématique est d'isoler les gouttes de solution d'échantillon et d'éliminer la phase continue (c'est-à-dire la solution d'équilibrage) transportant les gouttes. Pour cela, la coalescence des gouttes doit être provoquée et la solution d'équilibrage doit être éliminée. La stratégie retenue pour réaliser cette étape consiste à introduire dans le canal d'acheminement des gouttes au niveau de chaque sortie d'un étage de tri une zone de coalescence, réalisée en augmentant la largeur et la profondeur du canal. L'élargissement du canal permet en effet de ralentir les gouttes au moment où elles atteignent l'élargissement et donc de les faire coalescer par contact. Le canal doit être dimensionné pour permettre la séparation des deux phases par sédimentation et la récupération de la phase aqueuse au fond du canal. Bien entendu, cette solution de séparation est mise en œuvre au niveau du canal de la sortie du module, en aval du point de jonction du canal amenant la solution d'équilibrage Seq dans le canal de sortie.

Il ressort de la description faite ci-dessus que l'équipement de tri de l'invention présente un certain nombre d'avantages :

- Il permet un tri fiable de particules, sans trop alourdir sa structure, les moyens de contrôle de la pression étant particulièrement simple à mettre en oeuvre ;

- Il permet de s'affranchir de certaines contraintes de dimensionnement ;

- Il permet de s'adapter au nombre de gammes de tailles de particules à trier en connectant le nombre de modules nécessaires en série ;

**Revendications**

1. Equipement de tri de particules par gamme de tailles, lesdites particules étant comprises dans un échantillon fluidique, ledit équipement comprenant n étages de tri (Ei) de particules de rang i, connectés en série, avec i allant de 1 à n et n supérieur ou égal à 2, chaque étage de tri de rang i+1 étant destiné à séparer des particules d'une gamme de tailles plus petite que l'étage de rang i, chaque étage de tri comprenant une structure fluidique qui comporte :

   - Au moins une première entrée (INi_1), ladite première entrée de l'étage de tri de rang 1 étant destinée à recevoir ledit échantillon fluidique,
   - Un dispositif de séparation de particules (Zi) pour séparer les particules présentes dans l'échantillon selon un diamètre critique (Dci),
   - Une première sortie (OUTi_1) pour récupérer les particules triées par cet étage de tri de dimensions inférieures audit diamètre critique du dispositif de séparation (Zi) de l'étage de tri et une deuxième sortie (OUTi_2) pour récupérer les particules triées par cet étage de tri de dimensions supérieures audit diamètre critique du dispositif de séparation (Zi) de l'étage de tri (Ei),

Ledit équipement étant **caractérisé en ce qu'**il comporte :

- Une entrée (INi+1_1) de l'étage de tri de rang i+1 qui est connectée sur la première sortie (OUTi_1) de l'étage de tri de rang i pour recevoir les particules triées par l'étage de rang i qui sont de dimensions inférieures audit diamètre critique du dispositif de séparation (Zi) de l'étage de tri de rang i,
- Des moyens (3) de contrôle de la pression de fluide appliquée sur chaque première sortie (OUTi_1) et chaque deuxième sortie (OUTi_2) de chaque étage de tri (Ei), lesdits moyens de contrôle de la pression comportant des canaux fluidiques agencés pour véhiculer une solution d'équilibrage (Seq) jusqu'à chaque sortie d'un étage de tri, de manière à équilibrer la pression de fluide entre la première sortie et la deuxième sortie de chaque étage de tri.

2. Equipement selon la revendication 1, **caractérisé en ce que** les moyens de contrôle de la pression comportent un réseau (30) de canaux comprenant un canal principal (300) par lequel est introduite la solution d'équilibrage (Seq) et plusieurs canaux secondaires (301) connectés sur ledit canal principal et joignant chacun une sortie distincte de chaque étage de tri de manière à équilibrer de manière centralisée les pressions au niveau des deux sorties de chaque étage de tri.

3. Equipement selon la revendication 1, **caractérisé en ce que** les moyens de contrôle de la pression comportent des canaux indépendants débouchant au niveau de chaque sortie de chaque étage de tri (Ei) pour injecter de manière indépendante ladite solution d'équilibrage à chaque sortie de chaque étage de tri et des moyens de réglage indépendant du débit d'injection de la solution d'équilibrage pour équilibrer les pressions entre les deux sorties de chaque étage de tri.

4. Equipement de tri selon la revendication 1, **caractérisé en ce que** les moyens (3) de contrôle de la pression comportent une pluralité d'électrodes (51) agencées dans son réseau (30) de canaux et des moyens d'application d'un potentiel électrique sur chaque électrode pour déplacer des gouttes (60) de ladite solution équilibrage.

5. Equipement de tri selon l'une des revendications 1 à 4, **caractérisé en ce que** chaque étage de tri (Ei) comporte un module et **en ce qu'**un premier module d'un étage de tri (Ei) de rang i est relié à un deuxième module d'un étage de tri (Ei+1) de rang i+1 par ledit réseau (30) de canaux des moyens de contrôle de la pression.

6. Equipement de tri selon la revendication 5, **caractérisé en ce qu'**il est réalisé sous la forme d'un ensemble multicouches comportant au moins une première plaque (70) dans laquelle est formée la structure fluidique d'un étage de tri (Ei) et une deuxième plaque (72) comportant le réseau (30) de canaux fluidiques des moyens (3) de contrôle de la pression fixé sur une face, dite face inférieure, de ladite première plaque.

7. Equipement de tri selon la revendication 6, **caractérisé en ce que** la première plaque (70) est réalisée en silicium.

8. Equipement de tri selon la revendication 6 ou 7, **caractérisé en ce que** la deuxième plaque (72) est réalisée en matériau plastique.

9. Equipement de tri selon l'une des revendications 6 à 8, **caractérisé en ce qu'**il comporte un capot (71) fixé sur une face, dite face supérieure, de ladite première plaque (70).

10. Equipement de tri selon l'une des revendications 1 à 9, **caractérisé en ce que** le dispositif de séparation de particules de chaque étage de tri (Ei) de rang i comporte un réseau de piliers (Zi) agencé pour mettre en œuvre un tri par "déplacement latéral déterministe" (DLD).

11. Equipement de tri selon l'une des revendications 1 à 10 **caractérisé en ce qu'**il comporte un détecteur (Di) relié à la deuxième sortie (OUTi_2) de chaque étage de tri de rang i, ledit détecteur étant adapté à une gamme de tailles de particules triée par l'étage de tri.

12. Equipement de tri selon la revendication 11, **caractérisé en ce que** chaque détecteur (Di) est de type SMR (Suspended Microchannel Resonator) ou SNR (Suspended Nanochannel Resonator).

13. Equipement de tri selon l'une des revendications 1 à 12, **caractérisé en ce qu'**il comporte des moyens de séparation des gouttes d'échantillon fluidique par rapport à la solution d'équilibrage, lesdits moyens de séparation étant agencés sur au moins une sortie de chaque étage de tri (Ei).

14. Utilisation d'un équipement de tri de particules par gamme de tailles, lesdites particules étant comprises dans un échantillon fluidique, **caractérisé en ce qu'**il est conforme à celui défini dans l'une des revendications 1 à 13 et **en ce que** ladite solution d'équilibrage est un fluide non miscible avec l'échantillon fluidique.

**Patentansprüche**

1. Einrichtung zum Sortieren von Teilchen nach Größenbereichen, wobei die Teilchen in einer fluidischen Probe enthalten sind, wobei die Einrichtung n Sortierstufen (Ei) für Teilchen vom Rang i umfasst, die in Reihe verbunden sind, wobei i von 1 bis n läuft und n größer oder gleich 2 ist, wobei jede Sortierstufe vom Rang i+1 dazu bestimmt ist, Teilchen eines kleineren Größenbereichs abzutrennen, als die Stufe vom Rang i, wobei jede Sortierstufe eine fluidische Struktur umfasst, welche aufweist:

   - wenigstens einen ersten Eingang (INi_1), wobei der erste Eingang der Sortierstufe vom Rang 1 dazu bestimmt ist, die fluidische Probe zu empfangen,
   - eine Vorrichtung zur Trennung von Teilchen (Zi), zum Trennen der in der Probe vorhandenen Teilchen gemäß einem kritischen Durchmesser (Dci),
   - einen ersten Ausgang (OUTi_1) zum Gewinnen der von dieser Sortierstufe sortierten Teilchen mit Abmessungen, die kleiner als der kritische Durchmesser der Trennvorrichtung (Zi) der Sortierstufe sind, und einen zweiten Ausgang (OUTi_2) zum Gewinnen der von dieser Sortierstufe sortierten Teilchen mit Abmessungen, die größer als der kritische Durchmesser der Trennvorrichtung (Zi) der Sortierstufe (Ei) sind,

   wobei die Einrichtung **dadurch gekennzeichnet ist, dass** sie aufweist:

   - einen Eingang (INi+1_1) der Sortierstufe vom Rang i+1, welcher mit dem ersten Ausgang (OUTi_1) der Sortierstufe vom Rang i verbunden ist, um die von der Sortierstufe vom Rang i sortierten Teilchen zu empfangen, welche Abmessungen haben, die kleiner als der kritische Durchmesser der Trennvorrichtung (Zi) der Sortierstufe vom Rang i sind,
   - Mittel (3) zur Steuerung des Fluiddrucks, der auf jeden ersten Ausgang (OUTi_1) und jeden zweiten Ausgang (OUTi_2) jeder Sortierstufe (Ei) ausgeübt wird, wobei die Mittel zur Steuerung des Drucks Fluidkanäle aufweisen, die dafür ausgelegt sind, eine Ausgleichslösung (Seq) bis zu jedem Ausgang einer Sortierstufe zu transportieren, um so den Fluiddruck zwischen dem ersten Ausgang und dem zweiten Ausgang jeder Sortierstufe auszugleichen.

2. Einrichtung nach Anspruch 1, **dadurch gekennzeichnet, dass** die Mittel zur Steuerung des Drucks ein Netz (30) von Kanälen aufweisen, das einen Hauptkanal (300), durch welchen die Ausgleichlösung (Seq) eingeleitet wird, und mehrere Nebenkanäle (301), die an den Hautkanal angeschlossen sind und jeweils mit einem anderen Ausgang jeder Sortierstufe verbunden sind, um so auf zentralisierte Weise die Drücke an den zwei Ausgängen jeder Sortierstufe auszugleichen, umfasst.

3. Einrichtung nach Anspruch 1, **dadurch gekennzeichnet, dass** die Mittel zur Steuerung des Drucks unabhängige Kanäle, die an jedem Ausgang jeder Sortierstufe (Ei) münden, um auf unabhängige Weise die Ausgleichlösung an jedem Ausgang jeder Sortierstufe einzuspritzen, und Mittel zur unabhängigen Regelung der Einspritzrate der Ausgleichlösung, um die Drücke zwischen den zwei Ausgängen jeder Sortierstufe auszugleichen, aufweisen.

4. Sortiereinrichtung nach Anspruch 1, **dadurch gekennzeichnet, dass** die Mittel (3) zur Steuerung des Drucks mehrere Elektroden (51), die in ihrem Netz (30) von Kanälen angeordnet sind, und Mittel zum Anlegen eines elektrischen Potentials an jede Elektrode, um Tropfen (60) der Ausgleichslösung zu verschieben, umfassen.

5. Sortiereinrichtung nach einem der Ansprüche 1 bis 4, **dadurch gekennzeichnet, dass** jede Sortierstufe (Ei) ein Modul aufweist, und dadurch, dass ein erstes Modul einer Sortierstufe (Ei) vom Rang i mit einem zweiten Modul einer Sortierstufe (Ei+1) vom Rang i+1 durch das Netz (30) von Kanälen der Mittel zur Steuerung des Drucks verbunden ist.

6. Sortiereinrichtung nach Anspruch 5, **dadurch gekennzeichnet, dass** sie in der Form einer mehrschichtigen Anordnung ausgebildet ist, die wenigstens eine erste Platte (70), in welcher die fluidische Struktur einer Sortierstufe (Ei) ausgebildet ist, und eine zweite Platte (72), die das Netz (30) von Fluidkanälen der Mittel (3) zur Steuerung des Drucks aufweist, das auf einer "Unterseite" genannten Seite der ersten Platte befestigt ist, umfasst.

7. Sortiereinrichtung nach Anspruch 6, **dadurch gekennzeichnet, dass** die erste Platte (70) aus Silizium ausgebildet ist.

8. Sortiereinrichtung nach Anspruch 6 oder 7, **dadurch gekennzeichnet, dass** die zweite Platte (72) aus Kunststoff ausgebildet ist.

9. Sortiereinrichtung nach einem der Ansprüche 6 bis 8, **dadurch gekennzeichnet, dass** sie eine Haube (71) aufweist, die auf einer "Oberseite" genannten Seite der ersten Platte (70) befestigt ist.

10. Sortiereinrichtung nach einem der Ansprüche 1 bis 9, **dadurch gekennzeichnet, dass** die Vorrichtung zur Trennung von Teilchen jeder Sortierstufe (Ei) vom Rang i ein Netz von Säulen (Zi) aufweist, das für die Durchführung eines Sortiervorgangs durch "deterministische seitliche Verschiebung" (deterministic lateral displacement, DLD) ausgelegt ist.

11. Sortiereinrichtung nach einem der Ansprüche 1 bis 10, **dadurch gekennzeichnet, dass** sie einen Detektor (Di) aufweist, der mit dem zweiten Ausgang (OUTi_2) jeder Sortierstufe vom Rang i verbunden ist, wobei der Detektor für einen Größenbereich von Teilchen ausgelegt ist, der von der Sortierstufe sortiert wird.

12. Sortiereinrichtung nach Anspruch 11, **dadurch gekennzeichnet, dass** jeder Detektor (Di) vom Typ SMR (Suspended Microchannel Resonator) oder SNR (Suspended Nanochannel Resonator) ist.

13. Sortiereinrichtung nach einem der Ansprüche 1 bis 12, **dadurch gekennzeichnet, dass** sie Mittel zur Trennung der Tropfen einer fluidischen Probe in Bezug auf die Ausgleichlösung aufweist, wobei die Trennungsmittel an wenigstens einem Ausgang jeder Sortierstufe (Ei) angeordnet sind.

14. Verwendung einer Einrichtung zum Sortieren von Teilchen nach Größenbereichen, wobei die Teilchen in einer fluidischen Probe enthalten sind, **dadurch gekennzeichnet, dass** die Einrichtung mit derjenigen konform ist, die in einem der Ansprüche 1 bis 13 definiert ist, und dadurch, dass die Ausgleichlösung ein Fluid ist, das mit der fluidischen Probe nicht mischbar ist.

**Claims**

1. Device for sorting particles by size range, said particles being contained in a fluidic sample, said device comprising n sorting stages (Ei) for particles of rank i, connected in series, with i ranking from 1 to n and n being greater than or equal to 2, each sorting stage of rank i+1 being intended to separate particles of a smaller size range than the stage of rank i, each sorting stage comprising a fluidic structure which comprises:

- at least one first inlet (INi_1), said first inlet of the sorting stage of rank 1 being intended to receive said fluidic sample,
- a particle separation device (Zi) for separating the particles present in the sample according to a critical diameter (Dci),
- a first outlet (OUTi_1) for recovering the particles sorted by this sorting stage of dimensions smaller than said critical diameter of the separation device (Zi) of the sorting stage and a second outlet (OUTi_2) for recovering the particles sorted by this sorting stage of dimensions greater than said critical diameter of the separation device (Zi) of the sorting stage (Ei),

said device being **characterized in that** it comprises:

- an inlet (INi+1_1) of the sorting stage of rank i+1 which is connected to the first outlet (OUTi_1) of the sorting stage of rank i for receiving the particles sorted by the stage of rank i which are of dimensions smaller than said critical diameter of the separation device (Zi) of the sorting stage of rank i,
- means (3) for controlling the fluid pressure applied on each first outlet (OUTi_1) and each second outlet (OUTi_2) of each sorting stage (Ei), said pressure control means comprising fluidic channels arranged to convey a balancing solution (Seq) to each outlet of a sorting stage, so as to balance the fluid pressure between the first outlet and the second outlet of each sorting stage.

2. Device according to Claim 1, **characterized in that** the pressure control means comprise a network (30) of channels comprising a main channel (300) by which the balancing solution (Seq) is introduced, and several secondary channels (301) connected to said main channel and each joining a distinct outlet of each sorting stage so as to balance in a centralized manner the pressures at the two outlets of each sorting stage.

3. Device according to Claim 1, **characterized in that** the pressure control means comprise independent channels emerging at each outlet of each sorting stage (Ei) to independently inject said balancing solution at each outlet of each sorting stage and means for independently adjusting the flow rate of injection of the balancing solution for balancing the pressures between the two outlets of each sorting stage.

4. Sorting device according to Claim 1, **characterized in that** the pressure control means (3) comprise a plurality of electrodes (51) arranged in their network (30) of channels and means for applying an electrical potential to each electrode to displace drops (60) of said balancing solution.

5. Sorting device according to one of Claims 1 to 4, **characterized in that** each sorting stage (Ei) comprises a module and **in that** a first module of a sorting stage (Ei) of rank i is linked to a second module of a sorting stage (Ei+1) of rank i+1 by said network (30) of channels of the pressure control means.

6. Sorting device according to Claim 5, **characterized in that** it is produced in the form of a multilayer assembly comprising at least one first plate (70) in which the fluidic structure of a sorting stage (Ei) is formed and a second plate (72) comprising the network (30) of fluidic channels of the pressure control means (3) fixed onto a face, called bottom face, of said first plate.

7. Sorting device according to Claim 6, **characterized in that** the first plate (70) is produced in silicon.

8. Sorting device according to Claim 6 or 7, **characterized in that** the second plate (72) is produced in plastic material.

9. Sorting device according to one of Claims 6 to 8, **characterized in that** it comprises a cap (71) fixed onto a face, called top face, of said first plate (70).

10. Sorting device according to one of Claims 1 to 9, **characterized in that** the particle separation device of each sorting stage (Ei) of rank i comprises a network of pillars (Zi) arranged to implement a sort by "deterministic lateral displacement" (DLD).

11. Sorting device according to one of Claims 1 to 10, **characterized in that** it comprises a detector (Di) linked to the second outlet (OUTi_2) of each sorting stage of rank i, said detector being matched to a range of particle sizes sorted by the sorting stage.

12. Sorting device according to Claim 11, **characterized in that** each detector (Di) is of SMR (Suspended Microchannel Resonator) or SNR (Suspended Nanochannel Resonator) type.

13. Sorting device according to one of Claims 1 to 12, **characterized in that** it comprises means for separating drops of fluidic sample with respect to the balancing solution, said separation means being arranged on at least one outlet of each sorting stage (Ei).

14. Use of a device for sorting particles by size range, said particles being contained in a fluidic sample, **characterized in that** it is in accordance with that defined in one of Claims 1 to 13 and **in that** said balancing solution is a fluid that is non-miscible with the fluidic sample.

**Fig. 1A**

**Fig. 1B**

**Fig. 2**

**Fig. 3**

**Fig. 4A**

**Fig. 4B**

**Fig. 5**

*Fig. 6*

*Fig. 7*

*Fig. 8A*

*Fig. 8B*

*Fig. 9*

*Fig. 10*

Z

IN    OUT    70

71

70

Ei    Ei+1

71

70

72

*Fig. 11*

F    Seq

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009286300 A1